Europäisches Patentamt

**European Patent Office**

**Office européen des brevets**

(11) Publication number: **0 059 993**
**B1**

## (12) EUROPEAN PATENT SPECIFICATION

(45) Date of publication of patent specification: **09.11.88**

(21) Application number: **82200184.8**

(22) Date of filing: **16.02.82**

(51) Int. Cl.⁴: **A 21 D 13/08**

(54) **Fruit bread having a decorated top, a method for producing said fruit bread as well as a masking cream for use in said method.**

(30) Priority: **10.03.81 NL 8101148**

(43) Date of publication of application:
**15.09.82 Bulletin 82/37**

(45) Publication of the grant of the patent:
**09.11.88 Bulletin 88/45**

(84) Designated Contracting States:
**AT BE CH DE FR GB IT LI LU NL SE**

(56) References cited:
**FR-A-1 218 841**
**FR-A-1 584 155**
**FR-A-2 091 278**
**GB-A-1 080 998**
**GB-A-1 132 490**
**NL-A-6 813 493**

(73) Proprietor: **DE GRAAF'S BAKKERIJEN B.V.**
**Amersfoortseweg 22 P.O. Box 6**
**NL-3750 GA Bunschoten/Spakenburg (NL)**

(72) Inventor: **de Graaf, Gerrit**
**Koningin Wilhelminastraat 12**
**NL-3751 DD Bunschoten/Spakenburg (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

# 0 059 993

## Description

The invention relates to fruit bread having a decorated top, to a method for producing said fruit bread as well as to a masking cream for use in said method.

Fruit bread having a decorated top is known in general. Often such a decoration consists of a powdered sugar layer which is dredged onto the bread. Such a known layer exhibits the drawback that due to powdered sugar falling from the bread or due to its absorption of moisture this layer often becomes unsightly after some time. Onto this layer there may again be provided a garnish, for example candied bigarraux, cut orange peel, flaked almonds.

Previously one has indeed attempted to obtain a layer having better keeping qualities by dipping a doubled floor baked bread into molten creamery butter and thereupon dredging the same with sugar. Thereby the creamery butter also produced the effect that the softness of the bread was retained for a longer period of time. However in practice such a procedure presented great problems because the consecutive dipping and dredging operation is not compatible with the production on large scale.

In Germany where one generally eats a harder kind of bread fruit bread is sometimes coated with fat of pigs or lard, the yet warm fat then being dredged with sugar (melis sugar) which penetrates into the fat thus providing in cooperation with the congelation a hard sealing layer not passing moisture anymore. Usually such bread is baked quite some time before the envisaged consumption dats and stored in deepfrozen condition.

When applied to the softer textured Dutch kinds of bread which are baked at most one or two weeks before the envisaged consumption date and are not stored in the deep-freezer such a method however does not yield a satisfactory result. The Dutch bread shrinks causing such a fat layer to crumble off.

It has now been found that one may obtain satisfactory results indeed when appropriately applying a layer of a masking cream comprised of

    40—50% by weight of fats,
    30—45% by weight of sugar,
    1—20% by weight of milk powder (preferably whole milk powder) and
    8—20% by weight of milk derivatives,
    0—2% by weight of flavouring material and binder,

and then strewing decorating material thereon.

It is particularly surprising that the desired results may be obtained hereby because masking creams known *per se* as well as other known products for coating bakery products like fondant and white chocolate, will crumble off from bread this being caused by the shrinkage of the bread and will accordingly not yield good results.

In the above the term milk "derivatives" does not encompass milk powder.

When practising the invention the fruit bread is prepared from the usual starting materials and a layer is applied at a temperature of 35—50°C after baking and cooling down to 20—30°C. The masking cream in excess is blown off preferably in a direction at an oblique angle with respect to the direction in which the bread is moved. A suitable angle is 60—85°C. Over a length of the conveyor belt of from 5 to 15 meters, preferably 9 meters the applied mass cools down to the congealing point (usually 25°C) whereupon the powdered sugar is applied thereon.

A proper cooling down is of importance because a good effect is not obtained if the masking cream is yet too warm when strewing the decorating material thereon, whereas at too low a fat tempertaure the masking cream will form a layer of too high a viscosity. In practice the masking cream used in accordance with the invention will congeal completely within 1 minute after the addition of the sugar.

A usual masking cream is not conducive to satisfactory results because the congealing time will then amount to about half an hour resulting in the formation of cracks in the layer and thus causing crumbling off.

The masking cream used in accordance with the invention differs from the usual masking cream in that the latter contains more fat, less sugar, less milk derivatives and less milk powder than the present masking cream.

In the method according to the invention it is preferred to use whole milk powder as the milk powder.

The masking cream should contain a sufficient amount of proteins, particularly milk proteins. These may of course be provided by the milk powder. However, it is also possible to use milk proteins and a large amount of other fats together with a small amount of whole milk powder.

It is preferred to use saccharose as the sugar and to use lecithin as a suitable binder.

It is preferred to use vegetable fats having a chain length of 12 carbon atoms, palm kernels and soya as the fats.

An advantageous composition of the masking cream is prepared having the following composition.

    45—48% by weight of fats,
    35—40% by weight of sugar,
    10—15% by weight of lactose/milk proteins,
    4—5% by weight of whole milk powder and
    0,3—0,4% by weight of lecithin.

2

Example I.

Fruit bread was prepared in the usual way starting from the following constituents:

100 parts by weight of wheat flour
2 parts by weight of common salt
24 parts by weight of current bread powder*
10 parts by weight of yeast
3 parts by weight of bread improver*
3 parts by weight wheat protein containing powder*
60 parts by weight of water
100 parts by weight of semi-tropical fruits (currants, raisins).

This mixture was kneaded in a Wendel kneader at a speed of 240 rpm for 5½ minutes. After the addition of these semi-tropical fruits the kneading was continued at a decreased number of revolutions (80 rpm) for 2½ minutes. The dough temperature was 27°C and the first rise took 30 minutes.

After modelling the bread was allowed a second rise for yet other 35 minutes. The bread was baked at 240—250°C for 30 minutes then allowed to cool down for 90 minutes. The masking cream was applied to this bread by spraying a layer of masking cream at 40°C onto this bread being then at a tempeature of at least 35°C. The masking cream in excess was blown off in the direction at an oblique angle with respect to the direction in which the bread was moved. Thereupon the bread was conveyed on a conveyor belt over a distance of 9 meters whereby the applied mass cooled to 25°C where it was dredged with powdered sugar. Immediately thereafter the bread may be packed without detrimentally affecting the appearance of the applied layer.

The top layer obtained adhered well and remained also good for a long period of time. The bread was evaluated as follows.

Bread evaluation

The bread was evaluated in accordance with the standards of the Vereniging Station voor Maalderij an Bakkerij (Association Station for Grindery and Bakery) at Wageningen.

| | |
|---|---|
| Masked crust quality: | 9 |
| shape: | 8 |
| finish: | 8 |
| volume: | 8 |
| structure: | 7 |
| colour of crumb: | 7. |

Significance of the rating figures:

6=just passing
7=amply sufficient
8=good
9=very good.

The taste was measured by a test panel both 3 days and 14 days after the production.

| | After 3 days | After 14 days |
|---|---|---|
| Taste of crumb | Fully flavoured excellent | Flavoured, good |
| Taste of crumb+ masked crust | Fully flavoured, excellent | Flavoured, very good |

Variations in taste and colour of the masking cream

The taste and the colour of the masking cream may be adapted to the time of year or the event for which the decorated fruit bread is marketed. For Easter the colour of the cream may be yellowish with a lemon flavour. At great days with regard to the royal family the colour may be orange with an orange flavour. With Christmas the cream may have a neutral colour combined with snow white powdered sugar.

* Currant bread powder is a composition comprised of:

30—40% by weight of dextrose
30—40% by weight powdery animal fat
10—15% by weight of milk derivatives
flavouring materials
colouring agents
emulsifier blend
vitamin C.

* The bread improver used is a water emulsified animal fat with saccharose.

* The wheat protein containing powder consists of vital wheat gluten powder combined with an emulsifier blend.

Example la.

Example I was repeated though using a filling of 80 parts by weight of semi-tropical fruits per each 100 parts by weight of wheat flour. The evaluation obtained is similar to that of Example I.

Example Ib.

Example I was repeated though now using a filling of 120 parts by weight of semi-tropical fruits per each 100 parts by weight of wheat flour. The evaluation of the bread obtained was similar to that of Example I.

Example II.

The recipe of Example I was repeated while modelling 660 g portions of dough and including 150 g almond paste in the dough. The bread was baked in the manner described in Example I whereupon the following evaluation was made.

Bread evaluation

The bread was evaluated in accordance with the standards of the Vereniging Station voor Maalderij en Bakkerij at Wageningen.

| Masked crust quality: | 9 |
| shape: | 8 |
| finish: | 8 |
| volume: | 8 |
| structure: | 7 |
| colour of crumb: | 7 |

Significance of the rating figures:
6=just passing
7=amply sufficient
8=good good
9=very good.

The taste was assessed by a test panel both three days and 14 days after the production.

| | After 3 days | After 14 days |
| --- | --- | --- |
| Taste of crumb | Fully flavoured, excellent | Flavoured, good |
| Taste of crumb+ masked crust | Fully flavoured, excellent | Flavoured, very good |

Example III.

Example II was repeated though including 200 g of almond paste per 660 g of dough. Upon baking this resulted in a loaf having a final weight of 800 g. The evaluation was as follows:

Bread evaluation

The bread was evaluated in accordance with the standards of the Vereniging Station voor Maalderij en Bakkerij at Wageningen.

| Masked crust quality: | 9 |
| shape: | 8 |
| finish: | 8 |
| volume: | 8 |
| structure: | 7 |
| colour of crumb: | 7 |

Significance of the rating figures:
6=just passing
7=amply sufficient
8=good
9=very good

The taste was assessed by a test panel both 3 days and 14 days after the production.

| | After 3 days | After 14 days |
|---|---|---|
| Taste of crumb | Fully flavoured, excellent | Flavoured good |
| Taste of crumb+masked crust | Fully flavoured, excellent | Flavoured very good |

Example IV.

For the purpose of comparison fruit bread was decorated with Van Esso masking cream usually employed in decorating cake. The layer obtained showed an unsatisfactory appearance.

Apart from difficulties experienced during the production due to a congealing time of over half an hour the decoration layer exhibited broad cracks accompanied by crumbling off from the crust of the fruit bread. As a consequence thereof the fruit bread showed an unattractive appearance.

The masking cream used in the tests had the following composition:

| | |
|---|---|
| vegetable fats having a chain length of 12 carbon atoms, palm kernel, and soya | 46.5% |
| sugar | 38.5% |
| lactose/milk proteins | 12.0% |
| whole milk powder | 3.0% |
| lecithin | 0.355% |

**Claims**

1. Fruit bread having a decorated top characterized in that the top is provided with a masking cream comprising:
40—50% by weight of fats
30—45% by weight of sugar
1—20% by weight of milk powder (preferably whole milk powder) and
8—20% by weight of milk derivatives
0—2% by weight of flavouring materials and binder
having strewn thereon a decorating material.

2. The fruit bread according to claim 1 characterized in that the masking cream comprises 45—48% by weight of fats, 35—40% by weight of sugar, 10—15% by weight of lactose/milk proteins, 4.0—5.0% by weight of whole milk powder and 0.3—0.4% by weight of lecithin.

3. A method for producing fruit bread according to claim 1 or 2 characterized in that the masking cream at a temperature of from 35 to 50°C is applied to the bread at a temperature of from 20 to 30°C and the masking cream in excess is blown off whereupon the applied layer of masking cream is allowed to cool down to the congealing point and then covered with powdered sugar.

4. The method according to claim 3, characterized in that the masking cream in excess is blown off in a direction at an oblique angle with respect to the direction in which the bread is moved.

5. A masking cream suitable for use in the method of claim 3 or 4 characterized in that a masking cream is prepared having the following composition.
45—48% by weight of fats,
35—40% by weight of sugar,
10—15% by weight of lactose/milk proteins,
4—5% by weight of whole milk powder and
0.3—0.4% by weight of lecithin.

**Patentansprüche**

1. Früchtebrot mit einer verzierten Oberfläche, dadurch gekennzeichnet, daß die Oberfläche mit einer Aufstrichcreme versehen wird, die aus 40 bis 50 Gew.-% Fett, 30 bis 45 Gew.-% Zucker, 1 bis 20 Gew.-% Milchpulver (vorzugsweise Vollmilchpulver) und 8 bis 20 Gew.-% Milchderivaten, 0 bis 2 Gew.-% Aromatisierungsmittel und Bindemittel besteht, die mit Verzierungsmaterial bestreut ist.

2. Früchtebrot nach Anspruch 1, dadurch gekennzeichnet, daß die Aufstrichcreme 45 bis 48 Gew.-% Fett, 35 bis 40 Gew.-% Zucker, 10 bis 15 Gew.-% Lactose/Milchproteine, 4,0 bis 5,0 Gew.-% Vollmilchpulver und 0,3 bis 0,4 Gew.-% Lecithin enthält.

3. Verfahren zur Herstellung von Früchtebrot nach Anspruch 1 oder 2, dadurch gekennzeichnet, daß die Aufstrichcreme mit einer Temperatur von 35 bis 50°C auf das Brot mit einer Temperatur von 20 bis 30°C aufgebracht wird und die überschüssige Aufstrichcreme weggeblasen wird, wonach die aufgebrachte Schicht an Aufstrichcreme abkühlen gelassen wird auf den Erstarrungspunkt und dann mit Puderzucker bedeckt wird.

4. Verfahren nach Anspruch 3, dadurch gekennzeichnet, daß die überschüssige Aufstrichcreme

weggeblasen wird in eine Richtung mit einem geneigten Winkel im Hinblick auf die Richtung, in der das Brot bewegt wird.

5. Aufstrichcreme, geeignet zur Verwendung in dem Verfahren nach Anspruch 3 oder 4, dadurch gekennzeichnet, daß eine Aufstrichcreme hergestellt wird mit der folgenden Zusammensetzung:

45 bis 48 Gew.-% Fett,
35 bis 40 Gew.-% Zucker,
10 bis 15 Gew.-% Lactose/Milchprotein,
4 bis 5 Gew.-% Vollmilchpulver und
0,3 bis 0,4 Gew.-% Lecithin.

## Revendications

1. Pain aux fruits à dessus décoré, caractérisé en ce que le dessus est pourvu d'une crème à étaler comprenant:

40—50% en poids de matières grasses,
30—45% en poids de sucre,
1—20% en poids de lait en poudre (de préférence de lait non écrémé en poudre),
8—20% en poids de dérivés du lait,
0—2% en poids de matière aromatique et de liant,

sur laquelle est répandue une matière décorative.

2. Pain aux fruits suivant la revendication 1, caractérisé en ce que la crème à étaler comprend:

45—48% en poids de matières grasses,
35—40% en poids de sucre,
10—15% en poids de lactose/protéines du lait,
4,0—5,0% en poids de lait non écrémé en poudre et
0,3—0,4% en poids de lécithine.

3. Méthode de fabrication d'un pain aux fruits suivant la revendication 1 ou 2, caractérisée en ce qu'on applique la crème à étaler se trouvant à une température de 35 à 50°C sur le pain se trouvant à une température de 20 à 30°C et on sépare par soufflage le crème à étaler en excès, à la suite de quoi on laisse refroidir la couche appliquée de crème à étaler jusqu'au point de solidification et on recouvre alors de sucre en poudre.

4. Méthode suivant la revendication 3, caractérisée en ce qu'on sépare par soufflage la crème à étaler en excès, suivant une direction faisant un angle oblique par rapport à la direction suivant laquelle le pain se déplace.

5. Crème à étaler convenent pour être utilisée dans la méthode de la revendication 3 ou 4, caractérisée en ce qu'on prépare une crème à étaler ayant le composition suivante:

45—48% en poids de matières grasses,
35—40% en poids de sucre,
10—15% en poids de lactose/protéines du lait,
4—5% en poids de lait non écrémé en poudre et
0,3—0,4% en poids de lécithine.